# EUROPÄISCHE PATENTSCHRIFT

(11) **EP 1 002 695 B1**
(45) Veröffentlichungstag und Bekanntmachung des Hinweises auf die Patenterteilung: **04.05.2005**
(21) Anmeldenummer: 99121927.0
(22) Anmeldetag: 08.11.1999
(51) Int. Cl.: B60Q 1/26, F21S 8/10, F21V 5/00

(54) **Heckleuchte mit einer Streifenoptik für Fahrzeuge**
Vehicle lights with strip optical devices
Feux de véhicule avec des dispositifs optiques à bandes

(30) Priorität: 17.11.1998 DE 19852999
(43) Veröffentlichungstag der Anmeldung: 24.05.2000
(73) Patentinhaber: Volkswagen Aktiengesellschaft, 38436 Wolfsburg (DE)
(72) Erfinder: Werner, Michael, 38106 Braunschweig (DE)
(74) Vertreter: Rabe, Andreas

(56) Entgegenhaltungen:
- EP-A- 0 677 696
- EP-B- 0 549 423
- DE-A- 3 438 154
- GB-A- 2 139 340

## Beschreibung

Die Erfindung betrifft eine Heckleuchte für Fahrzeuge, insbesondere für Personenkraftfahrzeuge, bei der wenigstens ein Lichtscheibenabschnitt zeilenförmig angeordnete Rückstrahlerelemente zum Reflektieren von Fremdlicht aufweist.

Aus der EP 0 442 095 A2 ist eine gattungsgemäße Heckleuchte für Fahrzeuge bekannt, bei der die Lichtscheibenabschnitte für das Bremslicht, das Schlußlicht und das Nebelschlußlicht mit zeilenförmig angeordneten Rückstrahlertripeln zum Reflektieren von Fremdlicht versehen sind. Die Lichtscheibenabschnitte sind einzelnen Reflektoren zugeordnet, die jeweils eine Kammer zur Anordnung einer Lichtquelle für ein Signallicht bilden. Die mit Rückstrahlertripeln versehenen Zeilen wechseln sich dabei mit Zeilen ab, die aneinandergrenzende vertikal verlaufende Zylinderlinsen aufweisen, um das auf sie treffende , durch den jeweiligen Reflektor parallelgerichtete (Eigen-) Licht in der Horizontalen zu streuen (Streifenoptik).

In der EP 0 549 423 B1 ist eine Abdeckscheibe für eine Signalleuchte beschrieben, bei der auf der Innenseite wenigstens eines Lichtscheibenabschnittes pseudokatadioptrische Elemente mit einem konischen Ende angeordnet sind. Diese Elemente können in länglichen Streifen angeordnet sein und sich mit einer Mehrzahl von länglichen Streifen zur Behandlung eines Lichtbündels, insbesondere zur Streuung des Lichtes, abwechseln.

Des weiteren ist eine Signalleuchte Gegenstand der DE 40 03 569 A1 und der DE 41 28 995 A1, die eine transparente Abschlußscheibe und eine Anzahl von Lichtquellen aufweist, die in Reihen und/ oder Spalten angeordnet sind und die durch Leuchtdioden mit einer kegelförmigen Lichtabstrahlung gebildet sind. Jeder Leuchtdiode ist dabei eine Sammellinse zugeordnet. Zur Erzielung einer hohen Signalwirkung sind beim Gegenstand nach der DE 41 28 995 A1 die Linsen so ausgebildet und angeordnet, daß alles von der jeweiligen zugeordneten Leuchtdiode ausgesendete Licht auf der gesamten Basisfläche abgebildet wird. Zudem weist jede Linse an der Basisfläche eine lichtsammelnde Optik auf. Die Leuchtdioden sind von außen nicht sichtbar, womit die Signalleuchte dem Trend einer Sichtbarmachung der technischen Ausstattung nicht gerecht werden kann.

Die EP 0 677 696 A1 beschreibt eine Signalleuchte für Kraftfahrzeuge. Die Leuchte weist eine Abdeckscheibe auf, die Zonen, wie etwa Streifen, enthält, die abwechselnd angeordnet sind und die aus zwei verschiedenen Kunststoffen bestehen. Der erste Streifen besitzt auf der Innenseite Oberflächen, die eine Streuung der einfallenden Lichtstrahlung herbeiführen sollen. Dabei kann es sich insbesondere um Rillen- oder Kugelstrukturen handeln. Der zweite Streifen ist in einer anderen Farbe als der erste Streifen ausgeführt. Er weist Innenflächen auf, die eine totale oder nahezu totale Reflexion der von der Lichtquelle kommenden einfallenden Lichtstrahlung bewirkt.

Schließlich ist aus der GB 2 139 340 A eine Lichtquelle für Kraftfahrzeuge bekannt, die als Lichtquellen Leuchtdioden verwendet.

Es ist Aufgabe der Erfindung, eine Heckleuchte mit einer Streifenoptik für Fahrzeuge nach dem Oberbegriff des Anspruchs 1 zu schaffen, bei der wenigstens in einem Lichtscheibenabschnitt eine optimale Lichtverteilung und -ausbeute sichergestellt werden und ein Blick auf den Lichtscheibenabschnitt dessen technische Ausstattung erkennen läßt.

Diese Aufgabe wird bei einer Heckleuchte nach dem Oberbegriff des Anspruchs 1 durch dessen kennzeichnende Merkmale gelöst.

Die Erfindung besteht darin, daß bei einer Heckleuchte mit einer Streifenoptik, die in wenigstens einem Lichtscheibenabschnitt ausgebildet ist und aus zeilenförmig angeordneten Rückstrahlerelementen und zwischen diesen angeordneten streifenförmigen Bereichen zur Behandlung von Lichtbündeln gebildet ist, als Lichtquelle eine Vielzahl von Leuchtdioden eingesetzt wird. Jeweils ein Teil dieser Leuchtdioden ist einem derartigen Bereich zugeordnet und in Fahrzeuglängsrichtung im Abstand zu einer Lichtscheibe angeordnet. Die Bereiche zwischen den Rückstrahlerelementen sind jeweils aus einer horizontal angeordneten Zylinderlinse gebildet, um das von den Leuchtdioden ausgesendete Licht in der jeweiligen parallel zur Fahrzeuglängsachse verlaufenden vertikalen Ebene zu bündeln und im wesentlichen parallel abzustrahlen. Durch diese Zuordnung der Leuchtdioden zu den Bereichen zur Behandlung von Lichtbündeln wird bei einer optimalen Lichtausbeute erreicht, daß die Anordnung der Leuchtdioden im Innern der Leuchte von außen erkennbar ist.

Insbesondere für die Bremsleuchte wird ein solcher Lichtscheibenabschnitt mit den erfindungsgemäß zugeordneten Leuchtdioden vorteilhaft eingesetzt, da die Reaktionszeit der Leuchtdioden kurz und kürzer als bei Glühlampen ist, so daß die Signalwirkung bei einem Bremsvorgang verstärkt wird. Es werden Leuchtdioden eingesetzt, die rotes Licht abstrahlen, und die Farbe der Zylinderlinsen ist in Addition mit einer die Leuchte nach außen abschließenden durchsichtigen Abdeckscheibe (skin-molding-Schicht) weiß, rot oder rosa oder auch rauchglasartig. Die Zylinderlinsen können aus mehreren aneinandergereihten Teilen gebildet sein, um einen zusätzlichen optischen Effekt durch die vertikalen Stöße zu erreichen oder auch um kompliziertere Leuchtenformen erleichtert gestatten zu können. Um den Anteil von Streulicht zu reduzieren und damit auch die Signalwirkung zu verstärken, ist eine Parallelausrichtung der von den Leuchtdioden ausgesendeten Lichtstrahlen in vertikaler Ebene anzustreben. Diese wird erreicht, indem die Lichtquellen der Leuchtdioden in der Brennlinie der jeweiligenn Zylinderlinse (Aneinanderreihung von durch die Zylinderform der Linse gegebenen zahllosen Brennpunkten) angeordnet sind.

Die jeweils in einem Streifen angeordneten Leuchtdioden des Lignallichtes können zur Aufwandsreduzierung und zur Erreichung einer stärkeren punktuellen Akzentuierung auch im Abstand zueinander angeordnet sein.

Die Erfindung wird an einem Ausführungsbeispiel erläutert. In der zugehörigen Zeichnung zeigen schematisch:
- Fig. 1:: eine Heckleuchte mit einer Streifenoptik im Lichtscheibenabschnitt für die Bremsleuchte,
- Fig. 2:: diesen Lichtscheibenabschnitt vergrößert und
- Fig. 3:: einen Schnitt durch die Anordnung, nochmals vergrößert.

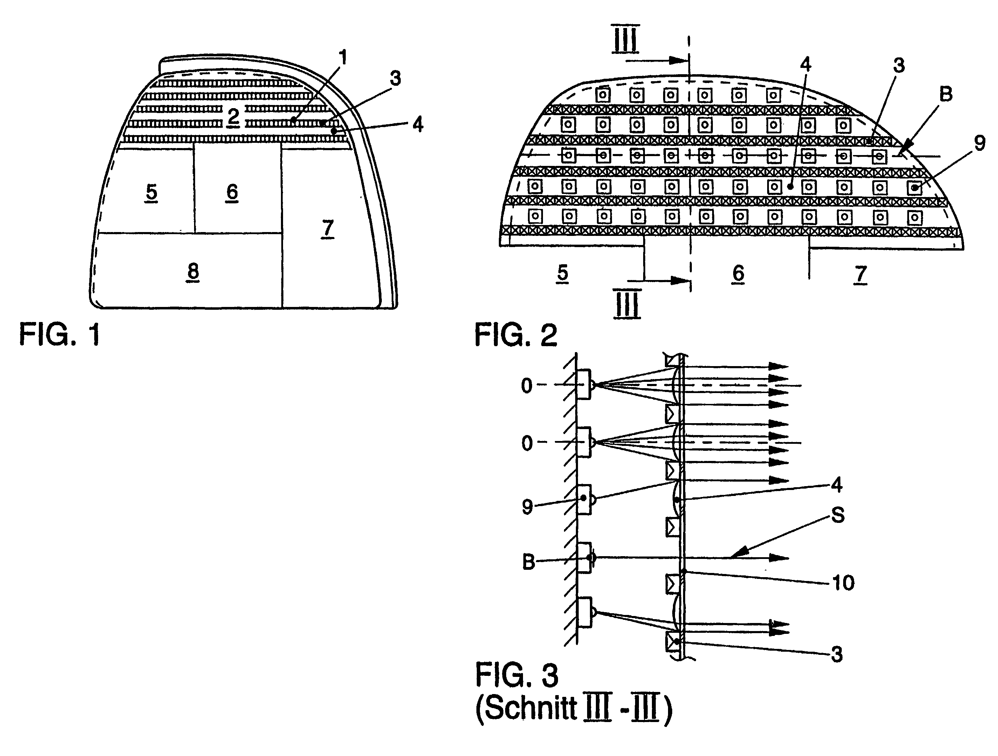

Fig. 1 zeigt die Draufsicht auf eine Heckleuchte mit einer Streifenoptik 1, bei der diese im Lichtscheibenabschnitt 2 für die Bremsleuchte ausgebildet ist. Diese Streifenoptik ist aus streifenförmig angeordneten Rückstrahlertripeln 3 und zwischen diesen horizontal angeordneten durchgängigen Zylinderlinsen 4 zur Lichtbündelung gebildet. Die weiteren, nicht in ihrer einzelnen Ausführung dargestellten Lichtscheibenabschnitte 5, 6, 7 und 8 deuten die Blinkleuchte (5), den Rückfahrscheinwerfer (6), das Schlußlicht (7) und das Nebelrücklicht (8) an. Die Lichtquelle für die Bremsleuchte ist aus einer Vielzahl von Leuchtdioden 9 gebildet, die rotes Licht ausstrahlen und, wie in Fig. 2 verdeutlicht, zwischen den streifenförmig angeordneten Rückstrahlertripeln 3 angeordnet und durch die Zylinderlinsen 4 von außen erkennbar sind. Nach außen hin sind die einander abwechselnden Streifen von einer durchsichtigen skin-molding-Schicht 10 (Fig. 3) überdeckt.

Fig. 2 zeigt in Verbindung mit Fig. 3, daß die Streifenoptik 1 aus zeilenförmig angeordneten Rückstrahlertripeln 3 und zwischen diesen angeordneten Zylinderlinsen 4 gebildet ist. Diese (4) sind einstückig ausgebildet und mit deren geometrischer Achse parallel zu den Rückstrahlertripeln 3 ausgerichtet. Die Streifen der Rückstrahlertripel 3 sind rot eingefärbt, die Zylinderlinsen 4 weiß. Letztere (4) weisen jeweils eine aus parallel nebeneinanderliegenden optischen Achsen gebildete optische Ebene 0 auf, in der eine quer zu den optischen Achsen verlaufenden Brennlinie B aus nebeneinanderliegenden Brennpunkten liegt, in der parallel einfallende und durch die Linse gesammelte Strahlen S zusammengeführt sind. An dieser im Abstand von im wesentlichen 20 mm von einer Zylinderlinse 4 gegebenen Brennlinie B sind jeweils die Leuchtdioden 9 im Abstand voneinander in einer Reihe angeordnet (Fig. 3).

Die streifenförmig angeordneten Rückstrahlertripel 3 des Lichtscheibenabschnittes 2 reflektieren auf diesen fallendes Fremdlicht. Bei Nichtbetätigung der Bremse kann der Betrachter die im Innern der Bremsleuchte reihenweise angeordneten Leuchtdioden 9 hinter den weißen Zylinderlinsen 4, wie in Fig. 2 dargestellt, erkennen oder erahnen und damit Kenntnis von der technischen Ausstattung der Heckleuchte nehmen. Beim Betätigen der Bremse senden die Leuchtdioden 9 rotes Licht aus, das durch die im Abstand angeordneten Leuchtdioden 9 punktuell akzentuiert ist und sowohl bei Tage als auch in der Dunkelheit die Verwendung von Leuchtdioden 9 als Lichtquelle erkennen läßt.

### BEZUGSZEICHENLISTE

- 1: Streifenoptik
- 2: Lichtscheibenabschnitt
- 3: Rückstrahlertripel
- 4: Zylinderlinse
- 5: Lichtscheibenabschnitt
- 6: Lichtscheibenabschnitt
- 7: Lichtscheibenabschnitt
- 8: Lichtscheibenabschnitt
- 9: Leuchtdiode
- 10: skin-molding-Schicht
- 0: optische Ebene
- B: Brennlinie
- S: Strahlen

## Patentansprüche

1. Heckleuchte mit einer Streifenoptik für Fahrzeuge, bei der die Streifenoptik (1) in wenigstens einem Lichtscheibenabschnitt (2) ausgebildet ist und aus zeilenförmig angeordneten Rückstrahlerelementen (3) zum Reflektieren von Fremdlicht und zwischen diesen angeordneten streifenförmigen Bereichen zur Behandlung von Lichtbündeln gebildet ist, **dadurch gekennzeichnet, daß** als Lichtquelle eine Vielzahl von Leuchtdioden (9) eingesetzt ist und diese den streifenförmigen Bereichen zur Behandlung von Lichtbündeln in Fahrzeuglängsrichtung im Abstand zugeordnet sind, und daß diese Bereiche jeweils aus einer horizontal angeordneten Zylinderlinse (4) gebildet sind.

2. Heckleuchte nach Anspruch 1, **dadurch gekennzeichnet, daß** der Lichtscheibenabschnitt (2) die Bremsleuchte bildet, wobei die Leuchtdioden (9) rotes Licht abstrahlen und die Zylinderlinsen (4) weiß, rot oder rosa oder auch rauchglasartig eingefärbt sind.

3. Heckleuchte nach Anspruch 1 oder 2, **dadurch gekennzeichnet, daß** die Zylinderlinsen (4) aus mehreren aneinandergereihten Teilen gebildet sind.

4. Heckleuchte nach Anspruch 1, **dadurch gekennzeichnet, daß** die Lichtquellen der Leuchtdioden (9) in der Brennlinie (B) der jeweiligen Zylinderlinse (4) angeordnet sind.

5. Heckleuchte nach Anspruch 1, **dadurch gekennzeichnet, daß** die jeweils in einem Streifen angeordneten Leuchtdioden (9) im Abstand voneinander angeordnet sind.

## Claims

1. Rear light with strip optics for vehicles, in which the strip optics (1) are formed in at least one lens section (2) and are formed from reflector elements (3), which are arranged in the form of rows, for reflection of external light, and areas in the form of strips arranged in-between these for the production of light beams, **characterized in that** a large number of light-emitting diodes (9) are used as a light source and are associated with the areas in the form of strips for production of light beams, separated in the vehicle longitudinal direction, and **in that** these areas are each formed from a horizontally arranged cylindrical lens (4).

2. Rear light according to Claim 1, **characterized in that** the lens section (2) forms a brake light, with the light-emitting diodes (9) emitting red light, and the cylindrical lenses (4) being coloured white, red, pink or else being in the form of smoky glass.

3. Rear light according to Claim 1 or 2, **characterized in that** the cylindrical lenses (4) are formed from a number of parts arranged in a row.

4. Rear light according to Claim 1, **characterized in that** the light sources of the light-emitting diodes (9) are arranged on the focal line (B) of the respective cylindrical lens (4).

5. Rear light according to Claim 1, **characterized in that** the light-emitting diodes (9) which are each arranged in a strip are arranged at a distance from one another.

## Revendications

1. Feu arrière pour véhicule automobile, dans lequel l'optique (1) à bandes est réalisée dans au moins une partie (2) de la vitre du feu et est formée d'éléments réflecteurs (3) agencés en lignes et destinés à réfléchir la lumière extérieure et de régions en forme de bandes qui sont agencées entre ces éléments réflecteurs et sont destinées à traiter des faisceaux de lumière, **caractérisé en ce que** comme source de lumière, on utilise plusieurs diodes lumineuses (9) associées à distance aux régions en forme de bande, destinées à traiter des faisceaux de lumière dans le sens de la longueur du véhicule automobile et **en ce que** ces régions sont formées chacune d'une lentille cylindrique (4) respective agencée horizontalement.

2. Feu arrière selon la revendication 1, **caractérisé en ce que** la partie (2) de la vitre du feu forme le feu indicateur de freinage, les diodes lumineuses (9) émettant de la lumière rouge et les lentilles cylindriques (4) étant teintées en blanc, en rouge, en rose ou en verre fumé.

3. Feu arrière selon les revendications 1 ou 2, **caractérisé en ce que** les lentilles cylindriques (4) sont formées de plusieurs parties alignées en série.

4. Feu arrière selon la revendication 1, **caractérisé en ce que** les sources de lumière des diodes lumineuses (9) sont agencées dans l'axe focal (B) de la lentille cylindrique (4) correspondante.

5. Feu arrière selon la revendication 1, **caractérisé en ce que** les diodes lumineuses (9) agencées dans chacune des bandes sont agencées à distance les unes des autres.
